# EUROPEAN PATENT SPECIFICATION

(11) **EP 0 682 647 B1**
(45) Date of publication and mention of the grant of the patent: **17.12.1997**
(21) Application number: 94907028.8
(22) Date of filing: 31.01.1994
(51) Int. Cl.: C03C 12/00, C08K 3/40, C09C 3/04

(54) **CRUSHED GLASS**
GEBROCHENES GLAS
VERRE CONCASSE

(30) Priority: 08.02.1993 SE 9300398
(43) Date of publication of application: 22.11.1995
(73) Proprietor: SVENSK GLASATERVINNING AB, S-696 02 Hammar (SE)
(72) Inventor: BURSELL, Martin, S-191 45 Sollentuna (SE); HÄRDELIUS, Lars, Olov, S-183 51 Täby (SE); JÄRAS, Sven, S-183 75 Täby (SE); SCHWARTZ, Stephan, S-185 00 Vaxholm (SE); SYLWAN, Christopher, S-161 42 Bromma (SE)
(74) Representative: Larsson, Kjell
(86) International application number: SE9400073
(87) International publication number: WO9418136

(56) References cited:
- DE-A- 3 113 136
- DE-C- 2 557 938
- Dialog Information Services, File 351, World Patent Index 81-94, Dialog Accession No. 003479139, WPI Accession No. 82-27102E/14, SOFUE M: "Corrosion- Resistant Coating Compsn. Contg. Finely Crushed Glass Powder Polyepoxide Resin"; & JP,A,57 034 167, 820224, 8214 (Basic).

## Description

### Technical Field

The present invention relates to a completely new use for glass waste of the disposable and similar types, especially glass such as is collected in containers for recycling. More particularly, it has proven that after special processing such glass functions exceptionally well as white pigment in various contexts, especially in paints. The invention can thus be said to belong to the field of inorganic pigments.

### Background of the Invention

Glass wastes of various types, especially common household glass of the disposable type, i.e. bottles and jars and similar, are nowadays generally a target for collection in special containers for recycling, i.e. for preparing new glass. However, a great problem with this glass is that the market value is very low. This means, for instance, that the glass manufacturers currently only pay around 0.16 Swedish crowns per kilogramme because raw glass just costs them around 0.40 Swedish crowns per kilogramme and because the use of collected disposable glass includes cost demanding measures such as washing and sorting out of metals and porcelain. In other words, the profitability is currently not even enough to cover the costs of longer transports to various glass plants, in many cases.

In accordance with the present invention it has surprisingly proven that collected disposable glass, after a not specifically cost demanding treatment, functions exceptionally well as a white pigment, especially in paints. Accordingly, large amounts of such glass should be usable as cheap and environmentally favourable pigment, but still provide an income significantly greater than the above mentioned 0.16 Swedish crowns per kg. In this connection, it may be mentioned that the Swedish annual turnover of titanium dioxide in the paint branch is around 20,000 tonnes.

White-coloured paints, as well as tinted colours having a white base, for obvious reasons require the admixture of a white paint pigment. Several materials of inorganic origin are available as pigments of this type, of which the most valuable product in regard to hiding power and whiteness is titanium dioxide. However, titanium dioxide is also the most expensive material in this context and currently costs around 15 Swedish crowns per kg. Additionally, titanium dioxide is also far too white in many painting contexts and for this reason, and similarly for cost reasons, replacement or extending of titanium dioxide with cheaper white pigments is sometimes chosen. Zinc oxide and chalk may be mentioned as examples of cheaper white pigments, chalk for example not costing more than a few Swedish crowns per kg. When using zinc oxide or chalk, however, it is necessary to take into consideration that both of these materials have poorer hiding power and whiteness than titanium dioxide and therefore many factors must be evaluated when exchanging or replacing titanium dioxide as a white pigment.

### General Description of the Invention

In accordance with the present invention it has thus proven that transparent glass, for example of the type collected in containers for disposable glass, when sufficiently finely divided provides a very white powder which functions outstandingly as a pigment in various contexts. Amongst other things, the resulting white powder exhibits such whiteness and other valuable properties in these contexts, such as high refractive index, inertness, hiding power and clarity, that it can even replace titanium dioxide in many contexts. The enormous cost savings which this can imply are easily appreciated, and on top of this the new pigment of the invention is environmentally friendly and the new use of the invention at least in part solves the problems which exist today in relation to processing of disposable glass or crushed glass.

Even in those cases where the new product of the invention cannot replace titanium dioxide, it is at least an outstanding replacement material for zinc oxide or chalk, for example, in these contexts.

Although the invention will be primarily elucidated below in relation to use of the white pigment as a paint pigment, i.e. in paints, the new pigment of the invention is, of course, usable in countless other contexts where white pigments of inorganic materials have been utilized. Examples of such applications are the use of the pigment in paper and paper coatings, printing inks, plastics, leather materials, rubber materials, ceramic materials and enamel lacquers.

Additionally, a totally surprising finding in relation to the invention is that the starting material used, in the form of transparent glass, does not even necessarily need to be uncoloured. Even coloured glass of this kind, for example green or brown glasses, have thus proven to give a completely white pigment. This provides the additional advantage that it is not even necessary during waste processing to utilize the techniques which more and more are beginning to arise and which mean that uncoloured and coloured glasses are separately sorted. Also this means time and cost savings for the user as it is not solely a matter of every household doing this sorting, but such a sorting must then also be done at the glass recycling point since one hundred percent sorting by colour does not work in practice.

From the above, it will be apparent that collected disposable glass, when used in accordance with the invention, should provide a return well above the 0.16 Swedish crowns per kg which currently applies to recycled glass. In this regard, the market value of glass when used as white pigment is somewhat dependent on the degree of whiteness desired as this has proven to depend on the degree of grinding fineness. Coloured glass has thus proven to require a somewhat higher degree of fine grinding in order that the resulting powder should appear completely white, but grinding, for example, down to a particle size of around 1 pm means that the grinding costs can currently be estimated to around 0.50 Swedish crowns per kg. In other words, even in this case it is not a deterringly high cost, for example against the backdrop of the abovementioned 15 Swedish crowns per kg for titanium dioxide.

The reason that even coloured, transparent glass appears completely white at small particle sizes has not been conclusively established. Without limiting the invention in any way to this explanation, one explanation could however be that when a coloured but transparent particle is of a size similar to that of the light wavelength with which it is illuminated, the light passes through or is reflected, dependent upon the angle of incidence, without being absorbed. Another explanation could be that a transparent but coloured particle which is so small or thin imparts such a weak colouring that it cannot be registered by the eye. Regardless of this, the fact remains that we have established that a sufficiently fine division of transparent glass gives particles which are usable as a white pigment which is extremely surprising and which accordingly forms the basis of the present invention.

### Detailed Description of the Invention

More particularly, one aspect of the present invention relates to a white pigment of inorganic material, which is characterized in that it consists of finely divided particles from transparent, coloured or uncoloured glass or mixtures of such glass.

"Finely divided particles" will be understood in the present invention as glass which has been finely divided, for example by grinding, so far that the eye perceives the resulting particles as white particles. In this regard, the upper limit for the particles is, of course, dependent upon the degree of whiteness which is desired or requested in any particular case, and therefore the invention is not limited to any exact value in this respect. Usually, however, it is a matter of micronized particles, which in the present case means that the maximum particle size is a few or several tens of µm, for example 20 or 30 µm as an upper limit. Often, however, it is a matter of such stringent requirements as to whiteness that around 10 pm represents the upper limit for the particle size.

In principle, the expression "particle size" is used in the context of the invention in the same sense as in the prior art techniques in the field of pigments, especially paint pigments. In other words, it is generally a matter of the greatest dimension of the particle in any direction, i.e. the diameter in the case of substantially spherical particles. Additionally, as in the prior art, it is naturally the average particle size which matters, which generally means of course that it is not a matter of 100% particles with the above indicated upper particle size limit, but rather that the major portion of the particles should be of the indicated type.

In accordance with a preferred embodiment of the pigment of the invention, the particle size of the finely divided particles is within the range of 0.01 to 10 pm, as this generally provides the necessary whiteness to the pigment. Typically, this also means that it is enough to end up in the 0.1 to 10 pm range as it is often not necessary to incur the costs of grinding the particles such that the particles become less than 0.1 pm.

In accordance with another embodiment of the pigment of the invention, the particles have a size in an even narrower range, namely 0.01-2 pm, preferably 0.01-1 pm, especially 0.1-1 pm. This in particular applies when there are high demands for whiteness or often when the particles are obtained from coloured glass, because such glass generally requires greater fine division than uncoloured glass in order to achieve a corresponding degree of whiteness.

In accordance with another embodiment of the pigemnt of the invention, it is sufficient if the particles are brought to a size in the range of 1-10 pm, which especially applies when the particles are obtained from uncoloured glass.

As has been indicated above, an especially preferred embodiment of the invention is represented by the case where the particles are obtained from disposable glass or crushed glass, for example of the type which occurs in collecting containers, as this also solves many of the problems arising in relation to glass waste recycling.

The invention further relates to a method for preparing the above-mentioned white pigment of inorganic material, which method is characterized by starting from transparent, coloured or uncoloured glass, or mixtures of these, and finely dividing this glass in an appropriate fine division apparatus so as to obtain particles usable as white pigment.

The fine division of the glass can be done in any prior art fine division apparatus which can give sufficiently small particles. In particular, it may be the type of micronizing devices available in the field of paint pigment preparation, e.g. ball mills of various sorts.

Most often, the starting glass is not sufficiently broken up to be able to be directly used in, for instance, a ball mill, even if an initial crushing has been done in, for example, a container of the above indicated type. In such a case, the method of the invention of course includes an initial step where the glass is coarsely crushed in any suitable manner, for example with some form of hammer device.

Another aspect of the invention contemplates a composition of matter which comprises a white pigment of inorganic material as colouring pigment for providing a completely white product or a coloured product where another tint or colour is present but where the white pigment nevertheless is included as a part of the pigment composition. Characteristic of the new composition of matter of the invention is thus that this white pigment consists of the new white pigment of the present invention, i.e. the finely divided glass particles of the above indicated kind. In this connection, the new white pigment of the invention may wholly or partially substitute another prior art white pigment for use in the composition of matter.

The composition of matter may be a composition of any previously known sort in which white pigment has been utilized, for example any of the materials which have been recited above in relation to the general description of the present invention. An especially preferred composition of matter in accordance with the invention, is however, represented by a paint, in relation to which the new white pigment has proven to give good results and substantial advantages. The composition of the paint is otherwise similar to those of the prior art, i.e. binders, pigments etc. are in principle used in the same amounts as are usual in this technical field.

Finally, the present invention can also be defined as a completely new use of transparent, coloured or uncoloured glass, or mixtures of such glass sorts, namely as a white pigment of the above indcated type, the glass being in the form of particles which are sufficiently finely divided to be perceived as white.

As regards the especially preferred embodiments of said use, they have the same features as the above defined new pigment of the invention and the above defined new composition of matter of the invention and therefore these features need not be repeated once more.

### Examples

By way of conclusion, the invention will now be described by way of working examples below which show use of the new pigment of the invention in a paint.

### Example 1

1000 g of transparent, green and brown bottle glass were carefully washed and coarsely crushed with hammers and thereafter ground, together with 1000 g of water, in a porcelain ball mill having 1.5 kg of porcelain balls as grinding bodies for 24 hours. The slurry obtained after this grinding was mixed with a conventional paint binder in the form of 100 g of PVP (polyvinylpyrrolidone).

The resulting paint was used for test painting where it proved that the paint, by visual judgement, appeared similarly white as a wall paint commonly available in commerce. The layer had a thickness of around 70 pm.

Analysis of the particle size of the ground glass particles showed that it was in the range of 0.1-2 pm.

Despite that glass is an amorphous material, it apeared crystalline under the microscope, which perhaps explains the good reflectivity.

### Example 2

The experiment of Example 1 was repeated, except with transparent, uncoloured glass instead of the coloured glass. The resulting paint, upon test painting, could be visually assessed as even whiter than the colour in Example 1.

## Claims

1. A white pigment of inorganic material, characterized in that it consists of finely divided particles from transparent, coloured or uncoloured glass or mixtures thereof, the particle size of said particles being within the range of 0.01-10 µm.

2. A pigment according to claim 1, characterized in that the particle size of the particles is in the range of 0.1-10 µm.

3. A pigment according to claim 1, characterized in that the particles have a particle size in the range of 0.01-2 µm, preferably 0.01-1 µm, especially 0.1-1 pm.

4. A pigment according to claim 3, characterized in that the particles are obtained from coloured glass.

5. A pigment according to claim 2, characterized in that the particles have a particle size in the range of 1-10 µm.

6. A pigment according to claim 5, characterized in that the particles are obtained from uncoloured glass.

7. A pigment according to any one of the preceding claims, characterized in that the particles are obtained from disposable or crushed glass.

8. A composition of matter comprising a white pigment of inorganic material, characterized in that the white pigment consists of the finely divided glass particles as defined in any one of claims 1-7.

9. A composition of matter according to claim 8, characterized in that it is constituted by a paint.

10. The use of transparent, coloured or uncoloured glass, or mixtures thereof, as a white pigment, the glass being in the form of finely divided particles having a particle size within the range of 0.01-10 µm.

11. A use according to claim 10, where the particles size of the finely divided particles is in the range of 0.1-10 µm.

12. A use according to claim 10, where the particle size is in the range of 0.01-2 µm, preferably 0.01-1 µm, especially 0.1-1 µm.

13. A use according to claim 12, where the particles are obtained from coloured glass.

14. A use according to claim 11, where the particle size is in the range of 1-10 µm.

15. A use according to claim 14, where the particles are obtained from uncoloured glass.

16. A use according to any one of claims 10-15, where the particles are obtained from disposable glass or crushed glass.

17. A use according to any one of claims 10-16, where the white pigment is utilized in a paint.

## Patentansprüche

1. Weißpigment aus anorganischem Material, dadurch gekennzeichnet, daß es aus fein verteilten Partikeln von transparentem, gefärbtem oder ungefärbtem Glas oder Gemischen davon besteht, wobei die Teilchengröße der Partikel innerhalb des Bereiches von 0,01 - 10 µm liegt.

2. Pigment nach Anspruch 1, dadurch gekennzeichnet, daß die Teilchengröße der Partikel im Bereich von 0,1 - 10 µm liegt.

3. Pigment nach Anspruch 1, dadurch gekennzeichnet, daß die Partikel eine Teilchengröße im Bereich von 0,01 - 2 µm, vorzugsweise 0,01 - 1 µm, speziell 0,01 - 1 µm haben.

4. Pigment nach Anspruch 3, dadurch gekennzeichnet, daß die Partikel von gefärbtem Glas erhalten werden.

5. Pigment nach Anspruch 2, dadurch gekennzeichnet, daß die Partikel eine Teilchengröße im Bereich von 1 - 10 µm haben.

6. Pigment nach Anspruch 5, dadurch gekennzeichnet, daß die Partikel von ungefärbtem Glas erhalten werden.

7. Pigment nach einem der vorausgehenden Ansprüche, dadurch gekennzeichnet, daß die Partikel von Einwegglas oder Bruchglas erhalten werden.

8. Stoffzusammensetzung, umfassend ein Weißpigment aus anorganischem Material, dadurch gekennzeichnet, daß das Weißpigment aus den wie in einem der Ansprüche 1 - 7 definierten fein verteilten Glaspartikeln besteht.

9. Stoffzusammensetzung nach Anspruch 8, dadurch gekennzeichnet, daß sie aus einer Anstrichfarbe aufgebaut ist.

10. Verwendung von transparentem, gefärbtem oder ungefärbtem Glas oder Gemischen davon als Weißpigment, wobei das Glas in der Form fein verteilter Partikel mit einer Teilchengröße innerhalb des Bereiches von 0,01 - 10 µm vorliegt.

11. Verwendung nach Anspruch 10, wobei die Teilchengröße der fein verteilten Partikel im Bereich von 0,1 - 10 µm liegt.

12. Verwendung nach Anspruch 10, wobei die Teilchengröße im Bereich von 0,01 - 2 um, vorzugsweise 0,01 - 1 µm, speziell 0,1 - 1 µm liegt.

13. Verwendung nach Anspruch 12, wobei die Partikel von gefärbtem Glas erhalten werden.

14. Verwendung nach Anspruch 11, wobei die Teilchengröße im Bereich von 1 - 10 µm liegt.

15. Verwendung nach Anspruch 14, wobei die Partikel von ungefärbtem Glas erhalten werden.

16. Verwendung nach einem der Ansprüche 10 - 15, wobei die Partikel von Einwegglas oder Bruchglas erhalten werden.

17. Verwendung nach einem der Ansprüche 10 - 16, wobei das Weißpigment in einer Anstrichfarbe benutzt wird.

## Revendications

1. Pigment blanc de matière inorganique, caractérisé en ce qu'il consiste en particules finement divisées de verre transparent, coloré ou non coloré ou de leurs mélanges, la taille particulaire desdites particules étant dans la gamme de 0,01 à 10 µm.

2. Pigment selon la revendication 1, caractérisé en ce que la taille particulaire des particules est dans un intervalle de 0,1 à 10 µm.

3. Pigment selon la revendication 1, caractérisé en ce que les particules ont une taille particulaire dans la gamme de 0,01 à 2 µm, de préférence de 0,01 à 1 µm, en particulier de 0,1 à 1 µm.

4. Pigment selon la revendication 3, caractérisé en ce que les particules sont obtenues à partir de verre coloré.

5. Pigment selon la revendication 2, caractérisé en ce que les particules ont une taille particulaire dans la gamme de 1 à 10 µm.

6. Pigment selon la revendication 5, caractérisé en ce que les particules sont obtenues à partir de verre non coloré.

7. Pigment selon l'une quelconque des revendications précédentes. caractérisé en ce que les particules sont obtenues à partir de verre jetable ou pilé.

8. Composition de matière comprenant un pigment blanc de matière inorganique, caractérisée en ce que le pigment blanc est constitué des particules de verre finement divisées définies dans l'une quelconque des revendications 1-7.

9. Composition selon la revendication 8, caractérisée en ce qu'elle est constituée par une peinture.

10. Utilisation d'un verre transparent, coloré ou non coloré, ou de leurs mélanges, comme pigment blanc, le verre étant sous forme de particules finement divisées ayant une taille particulaire dans la gamme de 0,01 à 10 µm.

11. Utilisation selon la revendication 10, dans laquelle la taille particulaire des particules finement divisées est dans un intervalle de 0,1 à 10 µm.

12. Utilisation selon la revendication 10. dans laquelle la taille particulaire est dans un intervalle de 0,01 à 2 µm, de préférence de 0,01 à 1 µm, en particulier de 0,1 à 1 µm.

13. Utilisation selon la revendication 12, dans laquelle les particules sont obtenues à partir de verre coloré.

14. Utilisation selon la revendication 11, dans laquelle la taille particulaire est dans un intervalle de 1 à 10 µm.

15. Utilisation selon la revendication 14, dans laquelle les particules sont obtenues à partir de verre non coloré.

16. Utilisation selon l'une quelconque des revendications 10-15. dans laquelle les particules sont obtenues à partir de verre jetable ou de verre pilé.

17. Utilisation selon l'une quelconque des revendications 10-16, dans laquelle le pigment blanc est utilisé dans une peinture.
